# EUROPÄISCHE PATENTSCHRIFT

(11) **EP 1 621 786 B1**
(45) Veröffentlichungstag und Bekanntmachung des Hinweises auf die Patenterteilung: **03.12.2008**
(21) Anmeldenummer: 05013195.2
(22) Anmeldetag: 18.06.2005
(51) Int. Cl.: F16D 13/72, B60K 23/02

(54) **Fahrzeugantrieb, insbesondere für Motorräder**
Automotive drive system, especially for motor cycle
Propulsion pour véhicule, notamment pour motocyclette

(30) Priorität: 28.07.2004 DE 102004036560
(43) Veröffentlichungstag der Anmeldung: 01.02.2006
(73) Patentinhaber: Bayerische Motoren Werke Aktiengesellschaft, 80809 München (DE)
(72) Erfinder: Mintzlaff, Johannes, Dr., 85635 Hoehenkirchen-Siegertsbrunn (DE); Goettlinger, Markus, 85748 Garching (DE)

(56) Entgegenhaltungen:
- WO-A-03/036118
- US-A- 4 529 073

## Beschreibung

Die vorliegende Erfindung betrifft einen Fahrzeugantrieb gemäß dem Oberbegriff des Patentanspruches 1.

Bei Motorrädern, die mit einer Nasskupplung ausgestattet sind, wird die Kupplung üblicherweise kontinuierlich mit Öl aus dem Motorölkreislauf versorgt. Das Motoröl gelangt zunächst über eine Drossel in das Getriebe. Durch den im Getriebe herrschenden Öldruck, der nur geringfügig über dem Druckniveau des Kurbelgehäuses liegt, wird das Öl üblicherweise eine hohle Getriebeeingangswelle und Schaltschienen verteilt. Das in die Getriebeeingangswelle fließende Öl versorgt diverse Lagerstellen auf der Getriebeeingangswelle. Der Rest des Motoröls tritt am Ende der Getriebeeingangswelle aus und wird auf die Innenseite des Kupplungsmitnehmers geschleudert. Von dort gelangt das Öl durch im Mitnehmer vorgesehene Bohrungen an die Innenseite des Kupplungslamellenpakets und durchströmt das Lamellenpaket radial nach außen.

Bei Fahrzeugen mit großen Motorleistungen muss die Kupplung mit einer entsprechend starken Kupplungsfeder ausgestattet sein. Um die für die Betätigung der Kupplung erforderliche Handkraft am Kupplungshebel in einer ergonomisch vertretbaren Größenordnung zu halten, kann häufig nur ein relativ geringer Kupplungsabhub realisiert werden. Das kontinuierlich in das Kupplungslamellenpaket fließende Öl kann in Verbindung mit dem geringen Kupplungsabhub, der in der Praxis weniger als 0,1 mm pro Kupplungslamelle beträgt, zu Störungen im Trennverhalten der Kupplung führen, insbesondere im warmen Zustand. Dabei besteht die Gefahr, dass die Kupplungslamellen durch das Motoröl miteinander "verkleben". Bei geöffneter Kupplung wird dann ein Schleppmoment übertragen, das größer als das Reibmoment der Getriebeeingangswelle ist. Dies hat zur Folge, dass die Drehzahl der Getriebeeingangswelle bei einer Kupplungsbetätigung im Leerlauf nicht abfällt bzw. nicht zum Stillstand kommt. Beim Einlegen des ersten Ganges kommt es deshalb zu einem deutlich vernehmbaren Geräusch. Damit ist zwar keine funktionelle Einschränkung verbunden, jedoch ist ein solches Geräusch Krachen unerwünscht, insbesondere bei hochwertigen Motorrädern.

Aufgabe der Erfindung ist es, die oben genannten Probleme zu vermeiden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Fahrzeugantrieb, insbesondere für Motorräder, aus, der einen Verbrennungsmotor aufweist, der über eine Kupplung mit einer hohlen Eingangswelle eines Getriebes koppelbar ist, wobei in der Eingangswelle eine Fluidverbindung vorgesehen ist, über welche die Kupplung mit Öl aus dem Getriebe versorgt wird. Der Kern der Erfindung besteht darin, dass in der Eingangswelle ein Absperrelement angeordnet ist, das bei geringen Drehzahlen und insbesondere im Leerlauf die Fluidverbindung zwischen dem Getriebe und der Kupplung absperrt und die Fluidverbindung bei höheren Drehzahlen öffnet. Bei dem Absperrelement kann es sich um einen "Fliehkraftregler" handeln. Wenn die Drehzahl der Getriebeeingangswelle kleiner als eine vorgegebene Drehzahl ist, wird das Absperrelement durch eine Feder in eine Sperrposition gedrückt, in der es die Fluidverbindung absperrt. Bei größeren Drehzahlen wird das Absperrelement entgegen der Federkraft verschoben. Durch das Verschieben des Absperrelements entgegen der Federkraft wird die Fluidverbindung freigegeben.

Dadurch kann in einfacher Weise eine fliehkraftgeregelte Kupplungsbeölung realisiert werden, was ein sicheres Trennen der Kupplung in allen Betriebszuständen des Motors ermöglicht. Wenn die Kupplung im Leerlauf bzw. bei geringen Motordrehzahlen gezogen wird, läuft die Getriebeeingangswelle aus und der erste Gang kann geräuscharm eingelegt werden.

Vorzugsweise ist das Absperrelement in einem Schiebergehäuse verschieblich angeordnet, das in die Eingangswelle eingesetzt ist. Die Fluidverbindung kann durch eine an der Außenseite des Schiebergehäuses vorgesehene Nut, die sich in Axialrichtung der Eingangswelle erstreckt und durch eine Innenseite der Eingangswelle begrenzt sein.

Durch die Feder wird das Absperrelement in Bezug auf eine Mittellängsachse der Eingangswelle radial nach außen gedrückt. Wesentlich für die Funktion des Absperrelements ist die Massenverteilung des Absperrelements. Das Absperrelement ist so ausgebildet, dass die Fluidverbindung in Bezug auf eine Mittellängsachse auf einer ersten Seite der Mittellängsachse liegt und der Schwerpunkt des Absperrelements auf einer der ersten Seite gegenüberliegenden zweiten Seite der Mittellängsachse. Dadurch ist sichergestellt, dass das Absperrelement bei größeren Drehzahlen öffnet.

Im folgenden wir die Erfindung im Zusammenhang mit der Zeichnung näher erläutert. Es zeigen:
- Figur 1: einen Längsschnitt durch einen Wellenstumpf der Getriebeeingangswelle; und
- Figur 2: einen Querschnitt durch den Wellenstumpf der Figur 1.

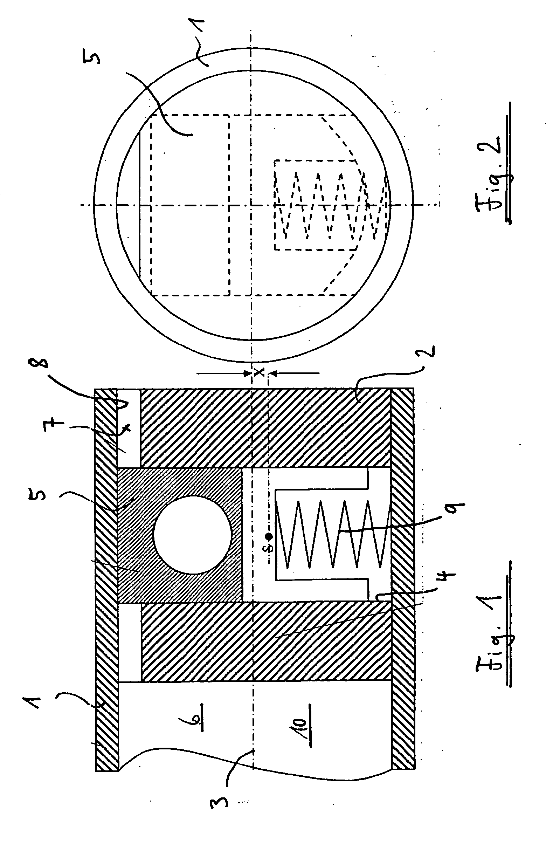

Figur 1 zeigt eine hohle Getriebeeingangswelle 1, in die ein Gehäuse 2 eines Fliehkraftreglers eingesetzt ist. Das Gehäuse 2 weist eine radial zu einer Mittellängsachse 3 der Eingangswelle 1 verlaufende Ausnehmung 4 auf. In die Ausnehmung 4 ist ein Absperrelement 5 eingesetzt. Auf einer, in Bezug auf die Mittellängsachse 3, ersten Seite 6 der Mittellängsachse 3 weist das Gehäuse 2 eine in Richtung der Mittellängsachse 3 verlaufende Nut 7 auf. Die an der Außenseite des Gehäuses 2 vorgesehene Nut 7 bildet zusammen mit der Innenseite 8 der Getriebeeingangswelle einen Fluidkanal. In dem hier gezeigten Zustand wird das Absperrelement 5 durch eine Feder 9 zur ersten Seite 6 hin gedrückt, d.h. gegen die Innenseite 8 der Hohlwelle 1. In diesem Zustand sperrt das Absperrelement 5 den Fluidkanal 7 ab.

Wie aus Figur 1 ersichtlich ist, ist das Absperrelement 5 so ausgebildet, dass sein Schwerpunkt S in Bezug auf die Mittellängsachse 3 auf einer der ersten Seite 6 gegenüberliegenden zweite Seite 10 der Mittellängsachse 3 liegt. Dadurch ist sichergestellt, dass das Absperrelement 5 bei Drehzahlen der Getriebeeingangswelle 1, die oberhalb einer vorgegebenen Drehzahl liegen, automatisch durch Fliehkraft entgegen der von der Feder 9 aufgebrachten Kraft verschoben wird und den Fluidkanal 7 freigibt.

Die Anordnung ist so ausgelegt, dass das Absperrelement 5 den Fluidkanal 7 bei geringen Drehzahlen bzw. im Leerlauf absperrt und bei Drehzahlen oberhalb einer vorgegebenen Drehzahl freigibt. Dadurch ist sichergestellt, dass im Leerlauf die Ölzufuhr zur Kupplung (nicht dargestellt) unterbrochen wird und die Kupplung ordnungsgemäß getrennt werden kann.

## Patentansprüche

1. Fahrzeugantrieb, insbesondere für Motorräder, mit
einem Verbrennungsmotor, der über eine Kupplung mit einer Eingangswelle eines Getriebes koppelbar ist, wobei in der Eingangswelle eine Fluidverbindung (7) vorgesehen ist, über welche die Kupplung mit Öl aus dem Getriebe versorgt wird,
**dadurch gekennzeichnet, dass** in der Eingangswelle (1) ein Absperrelement (5) angeordnet ist, das durch eine Feder (9) in eine Sperrposition gedrückt wird und die Fluidverbindung (7) absperrt, wenn die Drehzahl der Eingangswelle kleiner als eine vorgegebene Drehzahl ist und das bei Drehzahlen, die größer als die vorgegebene Drehzahl sind, durch Fliehkraft entgegen der Kraft der Feder (9) verschoben wird und die Fluidverbindung (7) freigibt.

2. Fahrzeugantrieb nach Anspruch 1, wobei das Absperrelement (5) in einem Schiebergehäuse (2) verschieblich angeordnet ist, das in die Eingangswelle (1) eingesetzt ist.

3. Fahrzeugantrieb nach Anspruch 2, wobei die Fluidverbindung (7) durch eine an einer Außenseite des Schiebergehäuses (2) vorgesehene Nut, die sich in Axialrichtung (3) der Eingangswelle (1) erstreckt und durch eine Innenseite (8) der Eingangswelle (1) gebildet ist.

4. Fahrzeugantrieb nach einem der Ansprüche 1 bis 3, wobei die Feder (9) das Absperrelement (5) in Bezug auf eine Mittellängsachse (3) der Eingangswelle (1) radial nach außen drückt.

5. Fahrzeugantrieb nach einem der vorausgehenden Ansprüche, wobei die Fluidverbindung (7) in Bezug auf die Mittellängsachse (3) auf einer ersten Seite (6) der Mittellängsachse (3) vorgesehen ist und das Absperrelement (5) so ausgebildet ist, dass sein Schwerpunkt stets auf einer zweiten Seite (10) der Mittellängsachse (3) liegt.

6. Fahrzeugantrieb nach Anspruch 5, wobei die Feder (9) auf der zweiten Seite (10) der Mittellängsachse (3) angeordnet ist.

## Claims

1. A drive for a vehicle, especially for motorcycles, comprising an internal combustion engine for coupling to the input shaft of a gear unit via a clutch, wherein the input shaft contains a fluid connection (7) for supplying the clutch with oil from the gear unit,
**characterised in that** a shut-off means (5) is disposed in the input shaft (1) and is pressed by a spring (9) into a locking position and closes the fluid connection (7) when the speed of revolution of the input shaft is below a set speed whereas at speeds above the set speed the shut-off element (5) is moved by centrifugal force against the force of the spring (9) and opens the fluid connection (7).

2. A drive according to claim 1, wherein the shut-off element (5) is movable in a slide-valve casing (2) inserted into the input shaft (1).

3. A drive according to claim 2, wherein the fluid connection (7) is formed by an inner side (8) of the input shaft (1) and by a groove extending in the axial direction (3) of the input shaft (1) on an outer side of the slide-valve casing (2).

4. A vehicle drive according to any of claims 1 to 3, wherein the spring (9), relative to a central longitudinal axis (3) of the input shaft (1), presses the shut-off element (5) radially outwards.

5. A drive according to any of the preceding claims, wherein the fluid connection (7), relative to the central longitudinal axis (3), is disposed on a first side (6) of the central longitudinal axis (3) and the shut-off element (5) is constructed so that its centre of gravity always lies on a second side (10) of the central longitudinal axis (3).

6. A drive according to claim 5, wherein the spring (9) is disposed on the second side (10) of the central longitudinal axis (3).

## Revendications

1. Entraînement de véhicule notamment de motocycle comportant un moteur à combustion interne relié par un embrayage à l'arbre d'entrée d'une transmission,
l'arbre d'entrée comportant une liaison par fluide (7), qui alimente l'embrayage en huile à partir de la transmission,
**caractérisé en ce que**
l'arbre d'entrée (1) comporte un élément d'arrêt (5) poussé par un ressort (9) en position de blocage et fermant la liaison de fluide (7) si la vitesse de rotation de l'arbre d'entrée est inférieure à une vitesse de rotation prédéfinie et qui, pour les vitesses de rotation supérieures à une vitesse de rotation prédéfinie, est coulissé par la force centrifuge contre la force du ressort (9), libérant la liaison de fluide (7).

2. Entraînement de véhicule selon la revendication 1,
pour lequel
l'élément d'arrêt (5) est monté de manière coulissante dans un boîtier de coulissement (2) logé dans l'arbre d'entraînement (1).

3. Entraînement de véhicule selon la revendication 2,
dans lequel
la liaison de fluide (7) est formée par une rainure prévue dans le côté extérieur du boîtier de coulissement (2), s'étendant dans la direction axiale (3) de l'arbre d'entrée (1) et formé par le côté intérieur (8) de l'arbre d'entrée (1).

4. Entraînement de véhicule selon l'une des revendications 1 à 3,
dans lequel
le ressort (9) pousse l'élément d'arrêt (5) radialement vers l'extérieur par rapport à l'axe longitudinal (3) de l'arbre d'entrée (1).

5. Entraînement de véhicule selon l'une des revendications précédentes,
selon lequel
la liaison de fluide (7) est prévue sur un premier côté (6) de l'axe longitudinal (3) par rapport à cet axe (3) et l'élément d'arrêt (5) est réalisé pour que son centre de gravité se situe toujours sur le second côté (10) de l'axe longitudinal (3).

6. Entraînement de véhicule selon la revendication 5,
dans lequel
le ressort (9) est prévu sur le second côté (10) de l'axe longitudinal (3).
